# EUROPEAN PATENT SPECIFICATION

(11) **EP 2 106 155 B1**
(45) Date of publication and mention of the grant of the patent: **31.08.2011**
(21) Application number: 07817086.7
(22) Date of filing: 15.10.2007
(51) Int. Cl.: H04W 4/12, H04L 12/58

(54) **A SYSTEM AND A METHOD FOR TRANSMITTING AND ENHANCING MESSAGE IN A WIRELESS COMMUNICATION NETWORK**
SYSTEM UND VERFAHREN ZUM SENDEN UND ERWEITERN EINER NACHRICHT IN EINEM DRAHTLOSEN KOMMUNIKATIONSNETZ
SYSTÈME ET PROCÉDÉ DE TRANSMISSION ET D'AMÉLIORATION DE MESSAGES DANS UN RÉSEAU DE COMMUNICATION SANS FIL

(30) Priority: 31.12.2006 CN 200610063751
(43) Date of publication of application: 30.09.2009
(73) Proprietor: Huawei Technologies Co., Ltd., Longgang District, Shenzhen Guangdong 518129 (CN)
(72) Inventor: SUN, Zhibin, Shenzhen Guangdong 518129 (CN)
(74) Representative: Thun, Clemens
(86) International application number: PCT/CN2007/070895
(87) International publication number: WO 2008/080325

(56) References cited:
- CN-A- 1 885 967
- CN-A- 1 885 967
- KR-A- 20050 094 227
- KR-A- 20050 094 227
- US-A1- 2003 224 809
- US-A1- 2005 198 511

## Description

### Field of the Invention

The present disclosure relates to wireless communication technologies, and in particular, to a system and method for enhancing messages and delivering the enhanced messages between wireless terminals.

### Background of the Invention

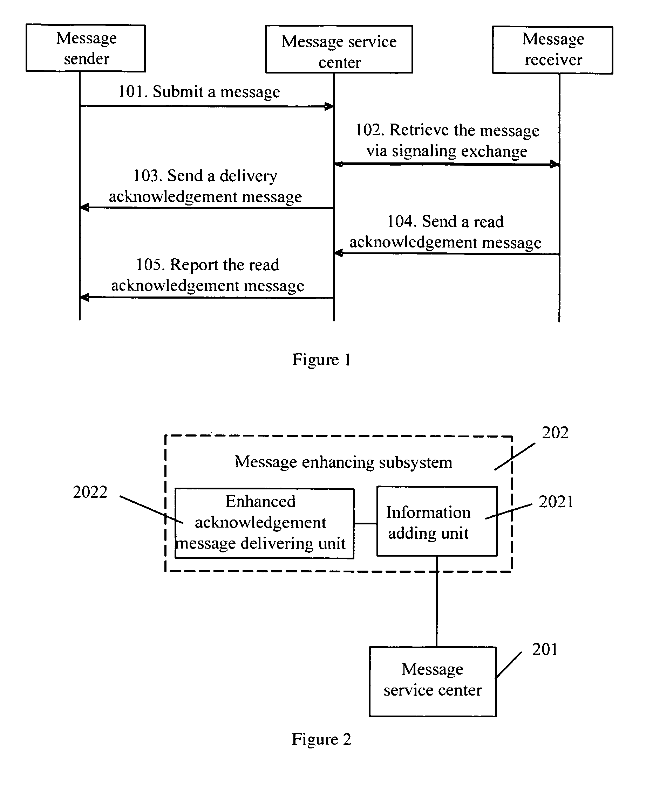

The message delivery acknowledgement and read acknowledgement is a basic function of a messaging service. With this function, a message sender knows the reception and reading of a message in time. As shown in Figure 1, the process of implementing delivery acknowledgement and read acknowledgement in the conventional art includes:
Step 101: A message sender submits a message destined for a message receiver to a message service center, requesting a delivery acknowledgement message and a read acknowledgement message.
Step 102: Upon reception of the message, the message service center instructs the message receiver to receive the message and the message receiver retrieves the message from the message service center via signaling exchange.
Step 103: The message service center sends a message delivery acknowledgement message to the message sender.
Step 104: The message receiver reads the message and sends a read acknowledgement message to the message service center.
Step 105: The message service center receives the read acknowledgement message and sends the read acknowledgement message to the message sender, and the message sender receives the acknowledgement message.

When the message receiver fails to retrieve the message due to different reasons, the message service center also sends a failure acknowledgment to the message sender, with the reason of failure.

With the above method, the message sender is able to know whether a message is successfully delivered and whether the message is read so as to have a clear view of the message delivery status. The acknowledgment messages, however, include only delivery and read information. The delivered information is limited. There is still space left for further utilization of acknowledgement messages.

In US 20050198511A1, there is disclosed a system for, and a method of, providing the transmission, receipt and content of an E-mail message. Once the RPost server 14 receives confirmation from recipient MTA 16 that the tagged version of the message was successfully received by recipient MTA 16, the RPost server 14 composes message receipt 20 as before and sends the receipt to sender 10 for his record. Revenue can also be generated for the placement of advertisements on receipts. In US 20030224809, there is disclosed a message transaction flow beginning when a message 440 is sent by an originator terminal 430 directed to a target terminal 410 via the message service system 420. When the messaging service system 420 responds to the message retrieval request 446 by delivering the message 448 to the target terminal 410. The target terminal acknowledges delivery of the message 448 in a delivery acknowledgement 450 directed to the messaging service system 420, and the messaging service system may indicate to the originator terminal 430 that the message delivery is complete 460.

### Summary of the Invention

Embodiments of the present disclosure provide a system and method for delivering and enhancing messages in a wireless communication system. The system and method may enhance acknowledgement messages and deliver the enhanced messages so that more information is carried in the messages and a new marketing channel is provided for the operator.

A system for delivering and enhancing messages in a wireless communication system includes: a message service center, adapted to forward an initial message from a message sending apparatus to a message receiving apparatus and send an acknowledgement message according to the initial message to a message enhancing subsystem, wherein the initial message is one of a multimedia message and a short message, the acknowledgement message is one of a multimedia message and a short message; and the message enhancing subsystem, adapted to receive the acknowledgement message, add information to the received acknowledgement message to create an enhanced acknowledgement message, and send the enhanced acknowledgement message to the message sending apparatus.

A method for delivering and enhancing messages in a wireless communication system includes: receiving, by a information adding unit of a system for delivering and enhancing messages, an acknowledgement message forwarded by a message service center, wherein the acknowledgement message is one of a multimedia message and a short message, and adding, by the information adding unit (2021), information to the acknowledgement message to create an enhanced acknowledgement message, where the acknowledgement message is returned by a message receiving apparatus to the message service center upon reception of an initial message forwarded by the message service center, and the initial message is one of a multimedia message and a short message; and sending, by an enhanced acknowledgement message delivering unit of the system for delivering and enhancing messages the enhanced acknowledgement message to a message sending apparatus.

With the system and method provided by embodiments of the present disclosure, information may be added to the previous pure acknowledgement message so that information data may be carried in the acknowledgement message for delivery. Thus, more information may be included in a message and the utilization of messages is more efficient.

### Brief Description of the Drawings

Figure 1 is a flowchart of delivering acknowledgment messages in the conventional art;
Figure 2 shows a system for delivering and enhancing messages according to an embodiment of the present disclosure;
Figure 3 is a flowchart of a method for delivering and enhancing messages when an initial message is delivered successfully; and
Figure 4 is a flowchart of a method for delivering and enhancing messages when an initial message fails to delivered.

### Detailed Description of the Invention

The present disclosure is described in detail hereunder with reference to the accompanying drawings and specific embodiments.

As shown in Figure 2, a system for delivering and enhancing messages according to an embodiment of the present disclosure includes a message service center 201 and a message enhancing subsystem 202.

The message service center 201 may be a short message service center or a multimedia message service center, or an apparatus for delivering other types of messages, and therefore is able to deliver short messages, multimedia messages or other types of messages. When an initial message is delivered, the message service center 201 firstly sets up a wireless connection with a message sending apparatus to receive the initial message from the message sending apparatus. Then the message service center 201 sets up a wireless connection with a message receiving apparatus and sends the initial message to the message receiving apparatus. After the initial message is successfully received and read, the message service center 201 receives a reception acknowledgement message and a message read acknowledgement message from the message receiving apparatus and sets up a connection with an information adding unit 2021 in the message enhancing subsystem 202, and sends a delivery success acknowledgment message and a read acknowledgement message to the information adding unit 2021. When the initial message is delivered unsuccessfully, the message service center 201 sends a delivery failure acknowledgement message to the information adding unit 2021.

The message enhancing subsystem 202 further includes the information adding unit 2021 and an enhanced acknowledgement message delivering unit 2022. The information adding unit 2021 is a service server or another apparatus that may add messages; the enhanced acknowledgement message delivering unit 2022 may be a short message service center, or a multimedia message service center, or another message delivery apparatus and is therefore able to deliver short messages, multimedia messages or other types of messages. The information adding unit 2021 is connected to the enhanced acknowledgment delivering unit 2022. The information adding unit 2021 is connected to the message service center 201 and receives acknowledgement messages from the message service center 201. The information adding unit 2021 adds additional information to an acknowledgment message to create an enhanced acknowledgement message and sends the enhanced acknowledgement message to the enhanced acknowledgement message delivering unit 2022. The enhanced acknowledgment delivering unit 2022 sets up a wireless connection with the message sender and delivers the enhanced acknowledgement message from the information adding unit 2021 to the message sender.

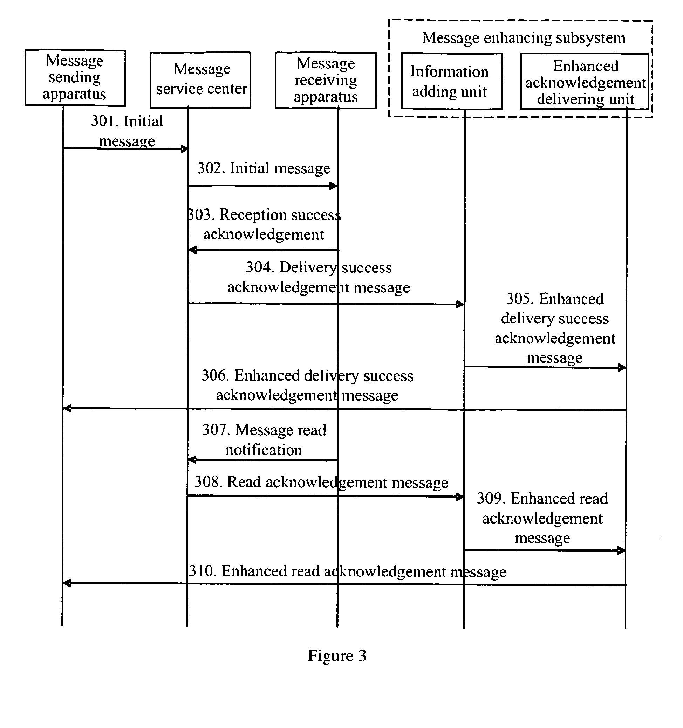

Figure 3 is a flowchart of a method for delivering and enhancing delivery success acknowledgement messages and read acknowledgement messages when the message receiving apparatus successfully receives and reads an initial message. The method includes:
Step 301: A message service center receives an initial message from a message sending apparatus. The initial message may be a short message or a multimedia message.
Step 302: The message service center forwards the received initial message to a message receiving apparatus and the message receiving apparatus receives the initial message.
Step 303: The message service center receives a reception success acknowledgement message from the message receiving apparatus.
Step 304: The message service center sends a delivery success acknowledgement message to the information adding unit of a message enhancing subsystem. The information adding unit receives the delivery success acknowledgement message, which may be a short message or a multimedia message.
Step 305: The information adding unit adds additional information to the delivery success acknowledgement message to create an enhanced delivery success acknowledgement message. The information adding unit sends the enhanced delivery success acknowledgement message to the enhanced acknowledgement message delivering unit. The enhanced acknowledgement message delivering unit receives the enhanced delivery success acknowledgement message, which may be a short message or a multimedia message.
Step 306: The enhanced acknowledgement message delivering unit forwards the enhanced delivery success acknowledgement message to the message receiving apparatus.
Step 307: The message receiving apparatus reads the initial message and sends a message read notification to the message service center. The message service center receives the notification.
Step 308: After receiving the message read notification, the message service center sends a read acknowledgement message to the information adding unit. The information adding unit receives the read acknowledgement message. The read acknowledgement message may be a short message or a multimedia message.
Step 309: The information adding unit adds additional information to the read acknowledgement message to create an enhanced read acknowledgement message. The information adding unit sends the enhanced read acknowledgement message to the enhanced acknowledgement message delivering unit. The enhanced acknowledgement message delivering unit receives the enhanced read acknowledgement message. The enhanced read acknowledgement message may be a short message or a multimedia message.
Step 310: The enhanced acknowledgement message delivering unit forwards the enhanced read acknowledgement message to the message sending apparatus.

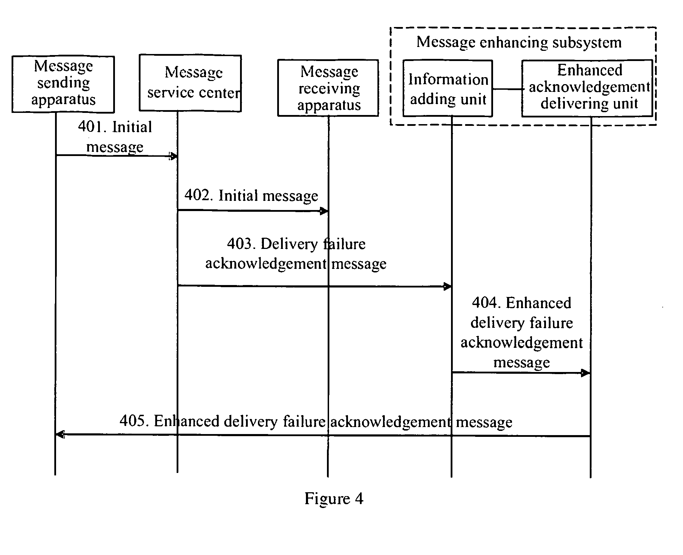

Figure 4 is a flowchart of a method for delivering and enhancing a delivery failure acknowledgement message when the message receiving apparatus fails to receive an initial message. The method includes:
Step 401: A message service center receives an initial message from a message sending apparatus.
Step 402: The message service center forwards the received initial message to a message receiving apparatus. The message receiving apparatus fails to receive the initial message because of no response or due to other reasons.
Step 403: The message service center sends a delivery failure acknowledgement message to the information adding unit of a message enhancing subsystem. The information adding unit receives the delivery failure acknowledgement message, which may be a short message or a multimedia message.
Step 404: The information adding unit adds additional information to the delivery failure acknowledgement message to create an enhanced delivery failure acknowledgement message. The information adding unit sends the enhanced delivery failure acknowledgement message to the enhanced acknowledgement message delivering unit. The enhanced acknowledgement message delivering unit receives the enhanced delivery failure acknowledgement message, which may be a short message or a multimedia message.
Step 405: The enhanced acknowledgement message delivering unit forwards the enhanced delivery failure acknowledgement message to the message sending apparatus.

Although the present disclosure has been described through some exemplary embodiments, the present disclosure is not limited to such embodiments. It is apparent that those skilled in the art may make various modifications and variations to the present disclosure without departing from the scope of the present disclosure. The present disclosure is intended to cover the modifications and variations provided that they fall in the scope of protection defined by the following claims.

## Claims

1. A system for delivering and enhancing messages in a wireless communication system, comprising:
a message service center (201), adapted to forward an initial message from a message sending apparatus to a message receiving apparatus and **characterized in that** the initial message is one of a multimedia message and a short message, and the message service center (201) is further adapted to send an acknowledgement message according to the initial message to a message enhancing subsystem, wherein the acknowledgement message is one of a multimedia message and a short message; and
the message enhancing subsystem (202) is adapted to receive the acknowledgement message, add information to the received acknowledgement message to create an enhanced acknowledgement message, and send the enhanced acknowledgement message to the message sending apparatus.

2. The system of claim 1, wherein the message enhancing subsystem comprises an information adding unit (2021) and an enhanced acknowledgement message delivering unit (2022), wherein:
the information adding unit (2021) is adapted to receive the acknowledgement message from the message service center (201), add information to the acknowledgement message to create an enhanced acknowledgement message, and send the enhanced acknowledgement message to the enhanced acknowledgement message delivering unit (2022); and
the enhanced acknowledgement message delivering unit (2022) is adapted to receive the enhanced acknowledgement message from the information adding unit (2021) and send the enhanced acknowledgement message to the message sending apparatus.

3. The system of claim 2, wherein the information adding unit (2021) is a service server, and the enhanced acknowledgement message delivering unit (2022) is one of a multimedia message service center and a short message service center.

4. The system of claim 1, wherein the message service center (201) is one of a multimedia message service center and a short message service center.

5. A method for delivering and enhancing messages in a wireless communication system, comprising:
Receiving (304), by a information adding unit (2021) of a system for delivering and enhancing messages, an acknowledgement message forwarded by a message service center, and **characterized in that** the acknowledgement message is one of a multimedia message and a short message, and the method further comprises:
adding (305), by the information adding unit (2021), information to the acknowledgement message to create an enhanced acknowledgement message, wherein the acknowledgement message is returned by a message receiving apparatus to the message service center upon reception of an initial message forwarded by the message service center, and the initial message is one of a multimedia message and a short message; and
Sending (306), by an enhanced acknowledgement message delivering unit (2022) of the system for delivering and enhancing messages, the enhanced acknowledgement message to a message sending apparatus.

6. The method of claim 5, wherein the acknowledgement message is one of a delivery success acknowledgement message, a delivery failure acknowledgement message, and a read acknowledgement message.

## Patentansprüche

1. System zum Abliefern und Erweitern von Nachrichten in einem drahtlosen Kommunikationssystem, umfassend:
eine Nachrichten-Dienststelle (201), die dafür ausgelegt ist, eine anfängliche Nachricht von einer Nachrichtensendevorrichtung zu einer Nachrichtenempfangsvorrichtung weiterzuleiten, und **dadurch gekennzeichnet, dass** die anfängliche Nachricht eine Multimedianachricht oder eine Kurznachricht ist und die Nachrichten-Dienststelle (201) ferner dafür ausgelegt ist, gemäß der anfänglichen Nachricht eine Bestätigungsnachricht zu einem Nachrichtenerweiterungs-Subsystem zu senden, wobei die Bestätigungsnachricht eine Multimedianachricht oder eine Kurznachricht ist; und
das Nachrichtenerweiterungs-Subsystem (202) dafür ausgelegt ist, die Bestätigungsnachricht zu empfangen, Informationen zu der empfangenen Bestätigungsnachricht hinzuzufügen, um eine erweiterte Bestätigungsnachricht zu erzeugen, und die erweiterte Bestätigungsnachricht zu der Nachrichtensendevorrichtung zu senden.

2. System nach Anspruch 1, wobei das Nachrichtenerweiterungs-Subsystem eine Infbrmationshinzufügeeinheit (2021) und eine Abliefereinheit (2022) erweiterter Bestätigungsnachrichten umfasst, wobei:
die Infbrmationshinzufügeeinheit (2021) dafür ausgelegt ist, die Bestätigungsnachricht von der Nachrichten-Dienststelle (201) zu empfangen, Informationen zu der Bestätigungsnachricht hinzuzufügen, um eine erweiterte Bestätigungsnachricht zu erzeugen, und die erweiterte Bestätigungsnachricht zu der Abliefereinheit (2022) erweiterter Bestätigungsnachrichten zu senden; und
die Abliefereinheit (2022) erweiterter Bestätigungsnachrichten dafür ausgelegt ist, die erweiterte Bestätigungsnachricht von der Infbrmationshinzufügeeinheit (2021) zu empfangen und die erweiterte Bestätigungsnachricht zu der Nachrichtensendevorrichtung zu senden.

3. System nach Anspruch 2, wobei die Informationshinzufügeeinheit (2021) ein Dienstserver ist und die Abliefereinheit (2022) erweiterter Bestätigungsnachrichten eine Multimedia-Nachrichten-Dienststelle oder eine Kurznachrichten-Dienststelle ist.

4. System nach Anspruch 1, wobei die Nachrichten-Dienststelle (201) eine Multimedia-Nachrichten-Dienststelle oder eine Kurznachrichten-Dienststelle ist.

5. Verfahren zum Abliefern und Erweitern von Nachrichten in einem drahtlosen Kommunikationssystem, mit den folgenden Schritten:
Empfangen (304) einer durch eine Nachrichten-Dienststelle weitergeleiteten Bestätigungsnachricht durch eine Informationshinzufügeeinheit (2021) eines Systems zum Abliefern und Erweitern von Nachrichten, und **dadurch gekennzeichnet, dass** die Bestätigungsnachricht eine Multimedia-Nachricht oder eine Kurznachricht ist und das Verfahren ferner Folgendes umfasst:
Hinzufügen (305) von Informationen zu der Bestätigungsnachricht durch die Informationshinzufügeeinheit (2021), um eine erweiterte Bestätigungsnachricht zu erzeugen, wobei die Bestätigungsnachricht von einer Nachrichtenempfangsvorrichtung an die Nachrichten-Dienststelle zurückgegeben wird, wenn eine durch die Nachrichten-Dienststelle weitergeleitete anfängliche Nachricht empfangen wird und die anfängliche Nachricht eine Multimedianachricht oder eine Kurznachricht ist; und
Senden (306) der erweiterten Bestätigungsnachricht durch eine Abliefereinheit (2022) erweiterter Bestätigungsnachrichten des Systems zum Abliefern und Erweitern von Nachrichten zu einer Nachrichtensendevorrichtung.

6. Verfahren nach Anspruch 5, wobei die Bestätigungsnachricht eine Abliefererfolg-Bestätigungsnachricht, eine Ablieferfehlschlag-Bestätigungsnachricht oder eine Lesebestätigungsnachricht ist.

## Revendications

1. Système de délivrance et de rehaussement de messages dans un système de communication sans fil, comprenant :
un centre de service de messages (201), adapté pour acheminer un message initial depuis un appareil d'envoi de message jusqu'à un appareil de réception de message, et **caractérisé en ce que** le message initial est l'un d'un message multimédia et d'un message court, et le centre de service de messages (201) est adapté en outre pour envoyer un message d'acquittement en fonction du message initial à un sous-système de rehaussement de message, le message d'acquittement étant l'un d'un message multimédia et d'un message court ; et
le sous-système de rehaussement de message (202) est adapté pour recevoir le message d'acquittement, ajouter des informations au message d'acquittement reçu afin de créer un message d'acquittement rehaussé, et envoyer le message d'acquittement rehaussé à l'appareil d'envoi de message.

2. Système selon la revendication 1, dans lequel le sous-système de rehaussement de message comprend une unité d'ajout d'informations (2021) et une unité de délivrance de message d'acquittement rehaussé (2022), dans lequel :
l'unité d'ajout d'informations (2021) est adaptée pour recevoir le message d'acquittement depuis le centre de service de messages (201), ajouter des informations au message d'acquittement afin de créer un message d'acquittement rehaussé, et envoyer le message d'acquittement rehaussé à l'unité de délivrance de message d'acquittement rehaussé (2022) ; et
l'unité de délivrance de message d'acquittement rehaussé (2022) est adaptée pour recevoir le message d'acquittement rehaussé depuis l'unité d'ajout d'informations (2021) et envoyer le message d'acquittement rehaussé à l'appareil d'envoi de message.

3. Système selon la revendication 2, dans lequel l'unité d'ajout d'informations (2021) est un serveur de service, et l'unité de délivrance de message d'acquittement rehaussé (2022) est l'un d'un centre de service de messages multimédias et d'un centre de service de messages courts.

4. Système selon la revendication 1, dans lequel le centre de service de messages (201) est l'un d'un centre de service de messages multimédias et d'un centre de service de messages courts.

5. Procédé de délivrance et de rehaussement de messages dans un système de communication sans fil, comprenant :
la réception (304), par une unité d'ajout d'informations (2021) d'un système de délivrance et rehaussement de messages, d'un message d'acquittement acheminé par un centre de service de messages, et **caractérisé en ce que** le message d'acquittement est l'un d'un message multimédia et d'un message court, et le procédé comprenant en outre :
l'ajout (305), par l'unité d'ajout d'informations (2021), d'informations au message d'acquittement afin de créer un message d'acquittement rehaussé, le message d'acquittement rehaussé étant renvoyé par un appareil de réception de message au centre de service de messages sur réception d'un message initial acheminé par le centre de service de messages, et le message initial étant l'un d'un message multimédia et d'un message court ; et
l'envoi (306), par une unité de délivrance de message d'acquittement rehaussé (2022) du système de délivrance et de rehaussement de messages, du message d'acquittement rehaussé à un appareil d'envoi de message.

6. Procédé selon la revendication 5, dans lequel le message d'acquittement est l'un d'un message d'acquittement de délivrance réussie, d'un message d'acquittement d'échec de délivrance et de message d'acquittement de lecture.
